# EUROPÄISCHE PATENTANMELDUNG

(11) **EP 3 614 540 A1**
(43) Veröffentlichungstag der Anmeldung: **26.02.2020**
(21) Anmeldenummer: 18465560.3
(22) Anmeldetag: 21.08.2018
(51) Int. Cl.: H02K 9/00

(54) **KÜHLEINRICHTUNG**

(71) Anmelder: Continental Automotive GmbH, 30165 Hannover (DE)
(72) Erfinder: Albert, Eusebio-Marius, 300737 Timisoara (RO); Muresan, Daniel, 307220 Giroc (RO); Parsan, Vlad, 300737 Timisoara (RO)

(57) **Zusammenfassung**

Die vorliegende Erfindung betrifft eine Kühleinrichtung für einen Elektromotor (20), insbesondere zum Antreiben eines Ladeluftkompressors (30) einer Brennkraftmaschine, wobei die Kühleinrichtung ein Gehäuse (10) mit einer Aussparung zur wenigstens teilweisen Aufnahme eines Rotors (22) des Elektromotors aufweist, in das wenigstens eine Röhre (40) integriert ist, die wenigstens einen Einlass (41) und wenigstens einen Auslass (42) aufweist.

## Beschreibung

Die vorliegende Erfindung betrifft eine Kühleinrichtung für einen Elektromotor, insbesondere einen Elektromotor zum Antreiben eines Ladeluftkompressors einer Brennkraftmaschine, einen Antrieb, insbesondere für einen Ladeluftkompressor einer Brennkraftmaschine, mit der Kühleinrichtung, einen Ladeluftkompressor mit der Kühleinrichtung, ein Kraftfahrzeug mit dem Ladeluftkompressor sowie ein Verfahren zum Kühlen eines Elektromotors mithilfe der Kühleinrichtung und ein Verfahren zum Herstellen der Kühleinrichtung.

Eine Aufgabe einer Ausführung der vorliegenden Erfindung ist es, eine Kühlung eines Elektromotors, insbesondere zum Antreiben eines Ladeluftkompressors einer Brennkraftmaschine, bzw. eine Kühleinrichtung hierfür zu verbessern.

Diese Aufgabe wird durch eine Kühleinrichtung mit den Merkmalen des Anspruchs 1 gelöst. Ansprüche 9-13 stellen einen Antrieb, Ladeluftkompressor bzw. Kraftfahrzeug mit einer hier beschriebenen Kühleinrichtung, ein Verfahren zum Kühlen eines Elektromotors mithilfe einer hier beschriebenen Kühleinrichtung bzw. ein Verfahren zum Herstellen einer hier beschriebenen Kühleinrichtung unter Schutz. Vorteilhafte Ausführungsformen der Erfindung sind Gegenstand der Unteransprüche.

Nach einer Ausführung der vorliegenden Erfindung weist eine Kühleinrichtung für einen Elektromotor, insbesondere einen Elektromotor, der zum Antreiben eines Ladeluftkompressors einer Brennkraftmaschine vorgesehen, insbesondere eingerichtet ist, bzw. verwendet wird, insbesondere eine Kühleinrichtung eines Antriebs mit dem Elektromotor, insbesondere eines Antriebs, der zum Antreiben eines Ladeluftkompressors einer Brennkraftmaschine, insbesondere eines Kraftfahrzeugs, vorgesehen, insbesondere eingerichtet ist, bzw. verwendet wird, ein (Kühleinrichtungs)Gehäuse mit einer, in einer Ausführung sacklochartigen, Aussparung, auf, die einen Rotor, in einer Weiterbildung eine Antriebswelle, in einer Ausführung (auch) einen Stator bzw. eine Statorwicklung, des Elektromotors wenigstens teilweisen aufnimmt bzw. hierzu vorgesehen, insbesondere eingerichtet, ist bzw. verwendet wird.

In einer Ausführung ist bzw. wird das (Kühleinrichtungs)Gehäuse einstückig (hergestellt). Hierdurch kann in einer Ausführung seine Stabilität verbessert werden.

Nach einer Ausführung der vorliegenden Erfindung ist bzw. wird in das (Kühleinrichtungs)Gehäuse wenigstens eine Röhre integriert, die wenigstens einen Einlass und wenigstens einen Auslass aufweist.

Nach einer Ausführung der vorliegenden Erfindung durchströmt Kühlfluid die wenigstens eine Röhre, um den Elektromotor zu kühlen, insbesondere von dem wenigstens einen Einlass zu dem wenigstens einen Auslass bzw. durch den wenigstens einen Einlass in die Röhre hinein und durch den wenigstens einen Auslass aus der Röhre heraus bzw. ist die Kühleinrichtung bzw. Röhre hierzu vorgesehen, insbesondere eingerichtet, bzw. wird hierzu verwendet.

Hierdurch kann in einer Ausführung eine Abdichtung und/oder (De)Montage verbessert, insbesondere vereinfacht, werden. Zusätzlich oder alternativ kann hierdurch in einer Ausführung Kühlfluid mit höherem Druck verwendet und/oder der Antrieb kompakt(er) und/oder stabil (er) ausgebildet werden.

In einer Ausführung ist bzw. wird die Röhre einstückig (hergestellt). Hierdurch kann in einer Ausführung ihre Dichtigkeit und/oder Stabilität verbessert werden.

In einer Ausführung weist die Röhre eine oder mehrere, in einer Ausführung wenigstens abschnittsweise axial voneinander beabstandete, Windungen auf, die die Aussparung (jeweils) umgreifen, insbesondere (jeweils) um 360° bzw. über die gesamte Umfangslänge der Aussparung. In einer Ausführung ist die Röhre spiralförmig bzw. -artig, insbesondere in der Form einer (hohlen) Schraubenfeder ausgebildet.

Hierdurch kann in einer Ausführung die Wärmeübertragung zwischen Kühlfluid und Elektromotor verbessert werden.

In einer Ausführung ist bzw. wird die Röhre wenigstens abschnittsweise in das Gehäuse eingegossen, in einer Ausführung beim Urformen des Gehäuses in dieses eingegossen, insbesondere beim Druckgießen des Gehäuses. In einer Ausführung ist bzw. wird das Gehäuse um wenigstens Abschnitte der Röhre, insbesondere deren Windung(en), urgeformt, insbesondere (druck)gegossen.

Hierdurch kann die Röhre in einer Ausführung besonders vorteilhaft in das Gehäuse integriert, insbesondere die (De)Montage, Dichtigkeit und/oder Stabilität (weiter) verbessert werden.

In einer Ausführung ist die Röhre wenigstens abschnittsweise, insbesondere eine oder mehrere ihrer Windungen vollständig, radial außen von einer Außenwand des Gehäuses und/oder radial innen von einer Innenwand des Gehäuses abgedeckt bzw. umschlossen.

Hierdurch kann in einer Ausführung die Röhre geschützt und/oder die Stabilität (weiter) verbessert werden.

Gleichermaßen können auch eine oder mehrere der Windungen in einer Ausführung wenigstens teilweise freiliegen bzw. radial außen über eine Außenwand des Gehäuses und/oder radial innen über eine Innenwand des Gehäuses hervorstehen.

Hierdurch kann in einer Ausführung die Wärmeübertragung zwischen Kühlfluid und Umgebung bzw. Elektromotor verbessert werden. Eine Axialrichtung ist vorliegend parallel zum Rotor bzw. zur Antriebswelle bzw. Drehachse des Elektromotors, eine Umfangsrichtung eine Rotationsrichtung des Rotors bzw. der Antriebswelle bzw. um die Drehachse, eine Radialrichtung senkrecht zur Axial- und Umfangsrichtung.

In einer Ausführung steht der Einlass aus dem Gehäuse hervor, in einer Ausführung radial über eine Außenwand des Gehäuses. Zusätzlich oder alternativ steht in einer Ausführung der Auslass aus dem Gehäuse hervor, in einer Ausführung radial über eine Außenwand des Gehäuses.

Hierdurch kann in einer Ausführung der Anschluss an eine Kühlfluidversorgung, insbesondere eine Dichtigkeit, (weiter) verbessert werden.

In einer Ausführung ist der Einlass in dem Gehäuse versenkt, in einer Ausführung radial unter eine Außenwand des Gehäuses und/oder in einem (hervorstehenden) Stutzen bzw. Sockel des Gehäuses. Zusätzlich oder alternativ ist der Auslass in dem Gehäuse versenkt, in einer Ausführung radial unter eine Außenwand des Gehäuses und/oder in einem (hervorstehenden) Stutzen bzw. Sockel des Gehäuses.

Hierdurch kann in einer Ausführung die Kühleinrichtung kompakt(er) und/oder stabil (er) ausgebildet werden.

In einer Ausführung sind Ein- und Auslass in Umfangsrichtung gegeneinander versetzt. Hierdurch kann in einer Ausführung der Anschluss an eine Kühlfluidversorgung und/oder ein Kühlfluidstrom verbessert werden.

In einer anderen Ausführung fluchten Ein- und Auslass axial. Hierdurch kann in einer Ausführung das Gehäuse kompakt(er) ausgebildet werden.

In einer Ausführung weist die Röhre, insbesondere eine oder mehrere ihrer Windungen, wenigstens abschnittsweise einen kreisförmigen, ovalen oder eckigen, insbesondere viereckigen, Querschnitt auf.

Durch kreisförmige Querschnitte kann in einer Ausführung eine Strömung des Kühlfluids, durch ovale Querschnitte in einer Ausführung eine Wärmeübertragung und durch eckige, insbesondere viereckige, Querschnitte in einer Ausführung eine Stabilität verbessert werden.

In einer Ausführung weist die Röhre wenigstens abschnittsweise Metall, insbesondere Kupfer, in einer Ausführung eine Kupferlegierung, und/oder ein Material mit einer Wärmeleitfähigkeit λ von wenigstens 10 W/(m·K) bei 0°C, insbesondere wenigstens 20 W/(m·K) bei 0°C, in einer Ausführung wenigstens 30 W/(m·K) bei 0°C, und/oder höchstens 400 W/(m·K) bei 0°C auf, sie kann insbesondere ganz oder teilweise hieraus hergestellt sein.

Zusätzlich oder alternativ weist in einer Ausführung das Gehäuse wenigstens abschnittsweise Metall, insbesondere Aluminium, in einer Ausführung eine Aluminiumlegierung, und/oder ein Material mit einer Wärmeleitfähigkeit λ von wenigstens 10 W/ (m·K) bei 0°C, insbesondere wenigstens 20 W/(m·K) bei 0°C, in einer Ausführung wenigstens 50 W/(m·K) bei 0°C, und/oder höchstens 400 W/(m·K) bei 0°C, auf, sie kann insbesondere ganz oder teilweise hieraus hergestellt sein.

Hierdurch kann in einer Ausführung eine Wärmeübertragung (weiter) verbessert werden.

Nach einer Ausführung der vorliegenden Erfindung weist ein Antrieb, insbesondere ein Antrieb, der zum Antreiben eines Ladeluftkompressors einer Brennkraftmaschine vorgesehen, insbesondere eingerichtet ist, bzw. verwendet wird, insbesondere ein Antrieb eines Ladeluftkompressors für eine bzw. einer Brennkraftmaschine, insbesondere eines Kraftfahrzeugs, einen Elektromotor, der einen Rotor, insbesondere eine Antriebswelle, und in einer Ausführung einen Stator bzw. eine ein- oder mehrteilige bzw. -stufige Statorwicklung aufweist, und eine hier beschriebene Kühleinrichtung auf, in deren (Gehäuse)Aussparung dieser Rotor, in einer Ausführung diese Antriebswelle und/oder dieser Stator bzw. diese Statorwicklung, insbesondere ein Motorgehäuse des Elektromotors, aus dem eine bzw. die Antriebswelle des Elektromotors hervorsteht, wenigstens teilweise aufgenommen ist. Gleichermaßen kann der Rotor des Elektromotors auch (motor)gehäuselos in der Aussparung aufgenommen sein bzw. das (Kühleinrichtungs) Gehäuse zugleich wenigstens einen Teil des Gehäuses des (ansonsten (außen)gehäuselosen) Elektromotors bilden.

Der Ladeluftkompressor ist in einer Ausführung ein durch den Elektromotor angetriebener, insbesondere mit dessen Rotor bzw. Antriebswelle gekoppelter, in einer Ausführung direkt verbundener, Radialkompressor, für den die erfindungsgemäße Kühleinrichtung besonders vorteilhaft ist. In einer Ausführung bildet das (Kühleinrichtungs)Gehäuse zugleich einen Teil des Ladeluftkompressors, in einer Ausführung begrenzt eine (Außen)Wand des (Kühleinrichtungs)Gehäuses einen Strömungskanal des Ladeluftkompressors bzw. ist hierzu vorgesehen, insbesondere eingerichtet, bzw. wird hierzu verwendet.

Für solche Elektromotoren bzw. Ladeluftkompressor(antriebe) ist die vorliegende Erfindung aufgrund der thermischen, mechanischen und strömungstechnischen Anforderungen sowie des zur Verfügung stehenden Bauraums besonders vorteilhaft.

Entsprechend stellt die Verwendung einer hier beschriebenen Kühleinrichtung zum Kühlen eines Elektromotors eines Antriebs, insbesondere für einen bzw. eines Ladeluftkompressor(s) einer Brennkraftmaschine, insbesondere eines Kraftfahrzeugs eine besonders bevorzugte Verwendung der vorliegenden Erfindung dar, ohne dass diese hierauf beschränkt ist.

Der Elektromotor und/oder die Aussparung weist in einer Ausführung (jeweils) einen maximalen Durchmesser von wenigstens 20 mm und/oder höchstens 200 mm und/oder eine maximale (Motorgehäuse- oder Gesamt- bzw. Aussparungs)Länge von wenigstens 20 mm und/oder höchstens 300 mm auf. Hierfür eignet sich eine erfindungsgemäße Kühleinrichtung besonders vorteilhaft.

Der Rotor des Elektromotors kann in einer Ausführung mit dessen Antriebswelle identisch oder, insbesondere über ein Getriebe, gekoppelt sein.

Die Aussparung wird bzw. ist in einer Ausführung durch einen Deckel verschließbar bzw. verschlossen, der in einer Ausführung zerstörungsfrei lösbar oder nicht zerstörungsfrei lösbar bzw. dauerhaft an dem (Kühleinrichtungs)Gehäuse befestigt ist bzw. wird und in einer Ausführung ein Bestandteil des Antriebs ist.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Kühleinrichtung nach einer Ausführung der vorliegenden Erfindung in einer perspektivischen Ansicht; und
- Fig. 2: die Kühleinrichtung in einem Axialschnitt.

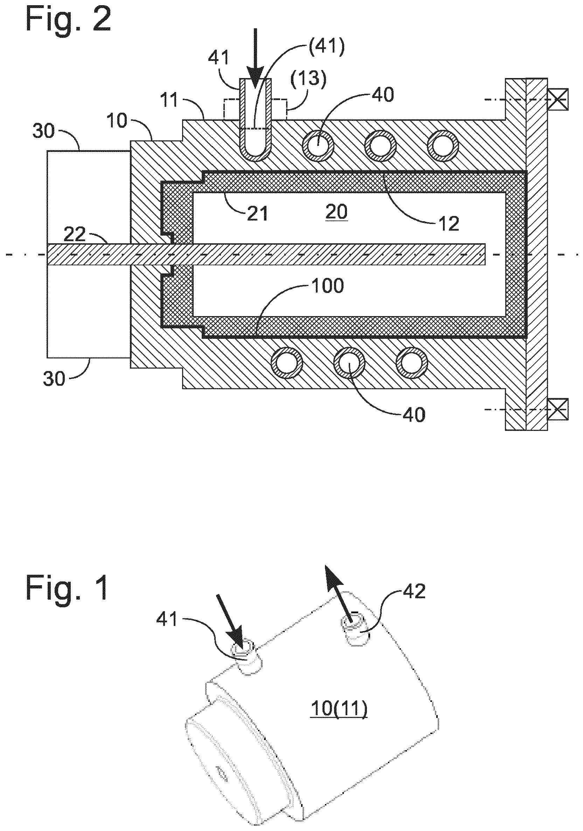

Fig. 1 zeigt eine Kühleinrichtung nach einer Ausführung der vorliegenden Erfindung in einer perspektivischen Ansicht. Die Kühleinrichtung weist ein Gehäuse 10 mit einer Aussparung auf, in der das Motorgehäuse 21 eines Elektromotors 20, aus dem dessen Rotor bzw. Antriebswelle 22 hervorsteht, aufgenommen ist, so dass auch der Rotor bzw. die Antriebswelle 22 teilweise in der Aussparung aufgenommen ist. Zwischen Kühleinrichtungsgehäuse 10 und Motorgehäuse 21 ist eine elektrische Isolation 100 angeordnet.

Der Elektromotor 20 bzw. dessen Rotor bzw. Antriebswelle 22 treiben einen Radial-Ladeluftkompressor an, von dem in Fig. 2 lediglich Laufschaufeln 30 angedeutet sind. Wie hieraus deutlich wird, bildet das Gehäuse 10 zugleich einen Teil des Ladeluftkompressors bzw. begrenzt dessen Strömungskanal, in dem die Laufschaufeln 30 angeordnet sind.

In das (Kühleinrichtungs)Gehäuse 10 sind bzw. werden beim Urformen, insbesondere Druckgießen, des Gehäuses mit einer Aluminiumlegierung mehrere axial voneinander beabstandete Windungen einer spiralförmigen Röhre 40 aus einer Kupferlegierung eingegossen, die einen Einlass 41 und einen Auslass 42 der Röhre 40 miteinander verbinden und jeweils die Aussparung bzw. das darin aufgenommene Motorgehäuse 21 umgreifen. Die Windungen sind radial außen von einer Außenwand 11 des (Kühleinrichtungs)Gehäuses 10 und radial innen von einer Innenwand 12 des (Kühleinrichtungs)Gehäuses 10 abgedeckt.

Im Ausführungsbeispiel stehen Einlass 41 und Auslass 42 aus dem (Kühleinrichtungs)Gehäuse 10 hervor, so dass eine Kühlfluidzu- bzw. -abfuhr auf diese auf- oder in diese eingesteckt werden kann (nicht dargestellt).

In einer Abwandlung, die in Fig. 2 gestrichelt und durch in Klammern gesetzte Bezugszeichen angedeutet ist, sind Einlass 41 und Auslass 42 in Stutzen 13 des (Kühleinrichtungs)Gehäuses 10 versenkt.

Im Ausführungsbeispiel weist die Röhre einen kreisförmigen Querschnitt auf, in einer nicht dargestellten Abwandlung kann sie auch einen ovalen oder eckigen, insbesondere viereckigen, Querschnitt aufweisen.

Zum Kühlen des Elektromotors 20 mithilfe der Kühleinrichtung durchströmt Kühlfluid die Röhre bzw. durch den Einlass 41 in diese ein und durch den Auslass 42 aus dieser aus, wie durch Kühlfluidströmungspfeile angedeutet.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

**Bezugszeichenliste**

| | |
|---|---|
| 10 | Gehäuse |
| 11 | Außenwand |
| 12 | Innenwand |
| 13 | Stutzen |
| 20 | Elektromotor |
| 21 | Motorgehäuse |
| 22 | Rotor bzw. Antriebswelle |
| 30 | Laufschaufel (Ladeluftkompressor) |
| 40 | Röhre |
| 41 | Einlass |
| 42 | Auslass |
| 100 | elektrische Isolation |

## Patentansprüche

1. Kühleinrichtung für einen Elektromotor (20), insbesondere zum Antreiben eines Ladeluftkompressors (30) einer Brennkraftmaschine, wobei die Kühleinrichtung ein Gehäuse (10) mit einer Aussparung zur wenigstens teilweisen Aufnahme eines Rotors (22) des Elektromotors aufweist, in das wenigstens eine Röhre (40) integriert ist, die wenigstens einen Einlass (41) und wenigstens einen Auslass (42) aufweist.

2. Kühleinrichtung nach dem vorhergehenden Anspruch, wobei die Röhre wenigstens eine Windung aufweist, die die Aussparung umgreift.

3. Kühleinrichtung nach dem vorhergehenden Anspruch, wobei die Röhre wenigstens zwei, insbesondere wenigstens abschnittsweise axial voneinander beabstandete, Windungen aufweist, die die Aussparung jeweils umgreifen.

4. Kühleinrichtung nach einem der vorhergehenden Ansprüche, wobei die Röhre wenigstens abschnittsweise in das Gehäuse eingegossen ist.

5. Kühleinrichtung nach einem der vorhergehenden Ansprüche, wobei die Röhre, insbesondere wenigstens eine Windung, wenigstens abschnittsweise radial außen von einer Außenwand (11) des Gehäuses und/oder radial innen von einer Innenwand (12) des Gehäuses abgedeckt ist.

6. Kühleinrichtung nach einem der vorhergehenden Ansprüche, wobei der Einlass und/oder der Auslass aus dem Gehäuse hervorsteht oder in dem Gehäuse versenkt ist.

7. Kühleinrichtung nach einem der vorhergehenden Ansprüche, wobei die Röhre, insbesondere wenigstens eine Windung, wenigstens abschnittsweise einen kreisförmigen, ovalen oder eckigen, insbesondere viereckigen, Querschnitt aufweist.

8. Kühleinrichtung nach einem der vorhergehenden Ansprüche, wobei die Röhre und/oder das Gehäuse wenigstens abschnittsweise Metall, insbesondere Kupfer und/oder Aluminium, und/oder ein Material mit einer Wärmeleitfähigkeit von wenigstens 10 W/(m·K) bei 0°C aufweist.

9. Antrieb, insbesondere für einen Ladeluftkompressor (30) einer Brennkraftmaschine, mit einem Elektromotor (20), der einen Rotor (22) aufweist, und einer Kühleinrichtung nach einem der vorhergehenden Ansprüche, in deren Gehäuseaussparung dieser Rotor, insbesondere ein Motorgehäuse (21) des Elektromotors, aus dem dessen Antriebswelle (22) hervorsteht, wenigstens teilweise aufgenommen ist.

10. Ladeluftkompressor (30) für eine Brennkraftmaschine, insbesondere eines Kraftfahrzeugs, mit einem Antrieb mit einer Kühleinrichtung nach einem der vorhergehenden Ansprüche.

11. Kraftfahrzeug mit einer Brennkraftmaschine mit einem Ladeluftkompressor (30) nach dem vorhergehenden Anspruch.

12. Verfahren zum Kühlen eines Elektromotors (20) mithilfe einer Kühleinrichtung nach einem der vorhergehenden Ansprüche, in deren Aussparung ein Rotor (22) des Elektromotors wenigstens teilweise aufgenommen ist, wobei Kühlfluid die wenigstens eine Röhre (40) durchströmt.

13. Verfahren zum Herstellen einer Kühleinrichtung nach einem der vorhergehenden Ansprüche, wobei die wenigstens eine Röhre (40) in das Gehäuse (10) der Kühleinrichtung integriert, insbesondere wenigstens abschnittsweise in das Gehäuse eingegossen wird.
